(19)

Europäisches
Patentamt
European
Patent Office
Office européen
des brevets

(11) **EP 2 887 667 A1**

(12) **EUROPEAN PATENT APPLICATION**

(43) Date of publication:
**24.06.2015 Bulletin 2015/26**

(51) Int Cl.:
*H04N 19/17* $^{(2014.01)}$     *H04N 19/186* $^{(2014.01)}$

(21) Application number: **13306771.0**

(22) Date of filing: **19.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
 • **Salmon, Philippe**
 **35576 Cesson-Sévigné (FR)**

 • **Andrivon, Pierre**
 **35576 Cesson-Sévigné (FR)**
 • **Bordes, Philippe**
 **35576 Cesson-Sévigné (FR)**

(74) Representative: **Huchet, Anne**
**Technicolor**
**1, rue Jeanne d'Arc**
**92443 Issy-les-Moulineaux Cedex (FR)**

(54) **Coding of high dynamic range images**

(57)     A method for encoding a sequence of pictures into a scalable bitstream comprising a first layer and a second layer is disclosed. The method comprises:
- encoding (10) a first version of the sequence of pictures into the first layer;
- reconstructing (12) at least one region of the first version of the
sequence of pictures;

wherein the method further comprises:
- processing (14) the reconstructed at least one region by applying a one-dimensional color Look Up Table independently on each color component of the reconstructed at least one region to get mapped color components and applying a matrix on the mapped color components to get correlated mapped color components;
- encoding (16) the one-dimensional color Look Up Table (s) and the matrix in the scalable bitstream; and
- encoding (18) a second version of the sequence of pictures from the processed at least one region into the second layer.

FIGURE 3

**EP 2 887 667 A1**

**Description**

1. FIELD OF THE INVENTION

A method for encoding a sequence of pictures into a scalable bitstream comprising a first layer and a second layer is disclosed. Corresponding decoding method, encoding device and decoding device are further disclosed.

2. BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

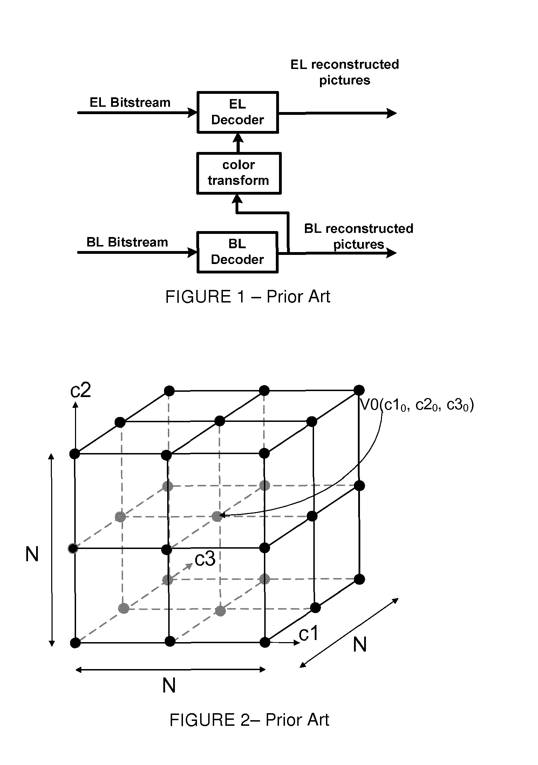

As depicted on **Figure 1**, scalable video decoding comprises decoding (respectively encoding) a Base Layer (BL) bitstream and at least one Enhancement Layer (EL) bitstream. Usually, EL pictures are predicted from upsampled decoded BL pictures. However, when the EL pictures and the BL pictures are represented with different color spaces and/or have been color graded differently (e.g. HDTV using Rec.709 color space and UHDTV using Rec.2020 color space), the prediction is less efficient. In order to improve the prediction, it is known to apply a color transform on the reconstructed BL pictures or part of such pictures. More precisely, the color transform maps the colors of the BL color space on the colors of the EL color space using color information.

This color transform is also known as Color Mapping Function (CMF). The CMF is for example approximated by a 3x3 gain matrix plus a vector of offsets (Gain-Offset model). In this case, the CMF is defined by 12 parameters. However, such an approximation of the CMF is not very precise because it assumes a linear transform model. Consequently, 3D Look Up Table (also known as 3D LUT) is used to describe such a CMF, without any *a priori* on the CMF model. The 3D LUT is much more precise because its size may be increased depending on the required accuracy. However, the 3D LUT may thus represent a huge data set.

A LUT approximating a CMF associates with at least one color value another color value. A 3D LUT thus associates with a triplet of color values another triplet of color values. On **Figure 2**, a square 3D LUT is represented as a lattice of NxNxN vertices. For each vertex $V(c1,c2,c3)$ of the 3D LUT, a corresponding triplet of color values ($V_{c1}$, $V_{c2}$, $V_{c3}$) needs to be stored. The amount of data associated with the 3D LUT is NxNxNxK, where K is the amount of bits used to store one LUT triplet value. The triplet value is for example a (R, G, B) triplet, a (Y, U, V) triplet or a (Y, Cb,Cr) triplet, etc. Encoding all the vertex color values is not efficient since it represents a huge amount of data. Consequently, the 3D LUT is often subsampled so that N=5 to 17 and K= 8 to 10 bits. It is then necessary to interpolate the color values of the 3D LUT in order to reconstruct color values to be used for mapping color values of a reconstructed BL picture. This interpolation (e.g. trilinear, tetrahedral interpolation) is computationally and memory demanding which may be an issue for limited resources embedded in TV sets or CE devices.

There is thus a need to encode a sequence of pictures into a scalable bitstream, wherein encoding comprises processing by applying a color transform reconstructed picture regions of a first layer to predict picture regions of a second layer while limiting memory requirements and computation demand.

3. BRIEF SUMMARY OF THE INVENTION

The purpose of the invention is to overcome at least one of the disadvantages of the prior art.

To this aim, a method for encoding a sequence of pictures into a scalable bitstream comprising a first layer and a second layer is disclosed that comprises:

- encoding a first version of the sequence of pictures into the first layer;
- reconstructing at least one region of the first version of the sequence of pictures;
- processing the reconstructed at least one region by applying a one-dimensional color Look Up Table independently on each color component of the reconstructed at least one region to get mapped color components and applying a matrix on the mapped color components to get correlated mapped color components;
- encoding the one-dimensional color Look Up Table(s) and the matrix in the scalable bitstream; and
- encoding a second version of the sequence of pictures from the processed at least one region into the second layer.

According to a specific embodiment, the encoding method further comprises adding a vector of offsets to the correlated mapped color components. Advantageously, encoding the one-dimensional color Look Up Table(s) comprises encoding, for each color component, one one-dimensional color Look Up Table.

Advantageously, the sequence of pictures is obtained from a source belonging to a set comprising:

- a local memory;
- a storage interface,
- a communication interface; and
- an image capturing circuit;

Exemplarily, the scalable bitstream is sent to a destination belonging to a set comprising:

- a local memory;
- a storage interface, and
- a communication interface.

A method for decoding a scalable bitstream comprising a first layer and a second layer representative of a sequence of pictures is also disclosed that comprises:

- reconstructing at least one region of the first version of the sequence of pictures;
- decoding one-dimensional color Look Up Table(s) and a matrix from the scalable bitstream; and
- processing the reconstructed at least one region by applying a decoded one-dimensional color Look Up Table independently on each color component of the reconstructed at least one region to get mapped color components and applying the decoded matrix on the mapped color components to get correlated mapped color components; and
- reconstructing a second version of the sequence of pictures from the second layer and from the processed at least one region.

According to a specific embodiment, the decoding method further comprises adding a vector of offsets to the correlated mapped color components. Advantageously, decoding the one-dimensional color Look Up Table(s) comprises decoding, for each color component, one one-dimensional color Look Up Table.

Advantageously, the scalable bitstream is obtained from a source belonging to a set comprising:

- a local memory;
- a storage interface; and
- a communication interface.

Advantageously, the sequence of pictures is sent to a destination belonging to a set comprising:

- a local memory;
- a storage interface;
- a communication interface; and
- a screen.

A coding device for encoding a sequence of pictures into a scalable bitstream comprising a first layer and a second layer is disclosed that comprises:

- means for encoding a first version of the sequence of pictures into the first layer;
- means for reconstructing at least one region of the first version of the sequence of pictures;
- means for processing the reconstructed at least one region configured to apply a one-dimensional color Look Up Table independently on each color component of the reconstructed at least one region to get mapped color components and configured to apply a matrix on the mapped color components to get correlated mapped color components;

- means for encoding the one-dimensional color Look Up Table(s) and the matrix in the scalable bitstream; and
- means for encoding a second version of the sequence of pictures from
  the processed at least one region into the second layer.

Advantageously, the encoding device is configured to execute the steps of the encoding method according to any of its embodiments.
Advantageously, the encoding device belongs to a set comprising:

- a mobile device:
- a camcorder;

- a encoding chip; and
- a video server.

A decoding device for decoding a scalable bitstream comprising a first layer and a second layer representative of a sequence of pictures is disclosed that comprises:

- means for reconstructing at least one region of the first version of the sequence of pictures;
- means for decoding one-dimensional color Look Up Table(s) and a matrix from the scalable bitstream; and
- means for processing the reconstructed at least one region configured to apply a decoded one-dimensional color Look Up Table independently on each color component of the reconstructed at least one region to get mapped color components and configured to apply the decoded matrix on the mapped color components to get correlated mapped color components; and
- means for reconstructing a second version of the sequence of pictures from the second layer and from the processed at least one region.

Advantageously, the decoding device is configured to execute the steps of the decoding method according to any of its embodiments.

Advantageously, the decoding device belongs to a set comprising:

- a mobile device:
- a set top box;
- a TV set;
- a tablet; and
- a decoding chip.

A computer program product is disclosed that comprises program code instructions to execute of the steps of the encoding method according to any of its embodiments when this program is executed on a computer.

A computer program product is disclosed that comprises program code instructions to execute of the steps of the decoding method according to any of its embodiments when this program is executed on a computer.

A processor readable medium is disclosed that has stored therein instructions for causing a processor to perform at least the steps of the encoding method according to any of its embodiments.

A processor readable medium is disclosed that has stored therein instructions for causing a processor to perform at least the steps of the decoding method according to any of its embodiments.

## 4. BRIEF DESCRIPTION OF THE DRAWINGS

Other features and advantages of the invention will appear with the following description of some of its embodiments, this description being made in connection with the drawings in which:

- Figure 1 depicts a scalable decoder according to the prior art adapted to decode a scalable bitstream comprising a base layer BL and one additional layer EL;
- Figure 2 diagrammatically shows a square 3D LUT represented as a lattice of NxNxN vertices according to the prior art;
- Figure 3 depicts a flowchart of a encoding method according to an exemplary embodiment of the invention;
- Figure 4 depicts a flowchart of a decoding method according to an exemplary embodiment of the invention;
- Figure 5 represents an exemplary architecture of an encoder configured to encode a sequence of picture in accordance with an exemplary embodiment of the invention; and
- Figure 6 represents an exemplary architecture of decoder configured to decode a bitstream in accordance with an exemplary embodiment of the invention.

## 5. DETAILED DESCRIPTION OF THE INVENTION

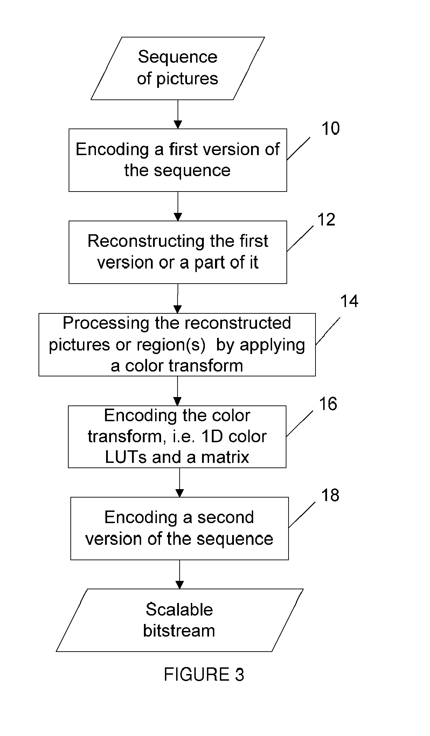

**Figure 3** depicts a method for encoding a sequence of pictures into a scalable bitstream comprising a first layer, e.g. a base layer, and a second layer according to a specific and non-limitative embodiment of the invention. The sequence of pictures may be obtained from a source. According to different embodiments of the invention, the source belongs to a set comprising:

- a local memory, e.g. a video memory or a RAM, a hard disk ;

- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (such as a CCD).

According to different embodiments of the invention, the scalable bitstream may be sent to a destination. As an example, the scalable bitstream is stored in a local memory , e.g. a video memory or a RAM, a hard disk. In a variant, the scalable bitstream may be sent to a storage interface, e.g. an interface with a mass storage, a ROM, an optical disc or a magnetic support and/or transmitted over a communication interface, e.g. an interface to a point to point link or a point to multipoint link or a broadcast network.

In a step 10, a first version of the sequence of pictures is encoded into the first layer. Encoding the first version of the sequence of pictures usually but not necessarily comprises, for one current region of a picture, determining a predictor from already encoded and reconstructed regions belonging either to the same picture as the current region (intra prediction) or from a different picture (inter prediction). A block, a macroblock, a slice, a CTU (English acronym for Coding Tree Unit) are examples of such regions. CTU is defined in section 3.31 of the HEVC standard document published as ITU-T Rec. H.265 in April 2013. The regions used for the prediction are for example identified using motion vectors. Information (e.g. motion vector, coding modes, etc) are also encoded in the first layer to make it possible to recover the predictor on the decoder side. The predictor is subtracted from the current region to form residuals. The residuals are then transformed into coefficients, e.g. by applying a DCT-like transform (DCT stands for "Discrete Cosine Transform") or wavelet transforms, etc. The coefficients are then quantized into quantized coefficients which are in turn entropy coded into the first layer. The steps are repeated on all the regions of a picture and on all the pictures to encode the whole sequence. The invention is not at all limited by the way the pictures are encoded.

In a step 12, the first version of the sequence of pictures or a part of it, i.e. at least one region, is reconstructed. Specifically, either all the pictures of the sequence or only regions used for prediction are reconstructed. Reconstructing a region of a picture comprises inverse quantizing the quantized coefficients to obtain reconstructed coefficients which are in turn inverse transformed into reconstructed residuals. Finally, the predictor of that region is added to the reconstructed residuals to obtain a reconstructed region. The steps are possibly repeated on all the regions of a picture and on all the pictures to reconstruct the whole sequence.

In a step 14, the pictures or the region(s) reconstructed at step 12 are processed by applying a color transform. The processing may also comprise upsampling the reconstructed BL pictures if their resolution is different from the resolution of the EL pictures.

Applying a color transform also known as color mapping function comprises applying a one-dimensional color LUT independently on each color component of a picture or of a region reconstructed at step 12. As an example, the pictures/regions of the reconstructed first version have 3 color components (e.g. Y'CbCr or R'G'B'). So, a 1D color LUT LUT_Y() is applied on the first component Y_in of the reconstructed picture/region, a 1D color LUT LUT_Cb() is applied on the second component Cb_in and a 1D color LUT LUT_Cr() is applied on the third component Cr_in. (Y_out, Cb_out, Cr_out) being the mapped color values, Y_out=LUT_Y(Y_in), Cb_out=LUT_Cb(Cb_in) and Cr_out=LUT_Cb(Cr_in). In this case, there are as many one-dimensional color LUTs used as they are color components. According to a specific and non-limiting embodiment, some of the one-dimensional color LUTs may be identical, e.g. LUT_Cb and LUT_Cr. Applying a color mapping function independently on each color component thus breaks the dependency between tristimulus values. Consequently, the memory requirements are reduced from $O(K^3)$ for the 3D LUT to 3* $O(K)$ for the 3 1D LUT with K being the sample range, i.e. 256 for 8-bit or 1024 for 10 bit video signals. Advantageously, interpolation becomes 1D instead of 3D. Advantageously, the 1D LUTs are subsampled with respect to the input and output sample range. In this case, interpolation (e.g. linear interpolation) of the color LUT samples makes it possible to reconstruct color mapping values for every sample values of the input range and output range. The subsampling of the 1D LUT may be non-uniform.

Applying 1D LUTs independently on each color component breaks component correlation and possibly decreases the efficiency of the interlayer prediction and thus the coding efficiency. Advantageously, applying a 1 D LUT on each color component is followed by composing the mapped components. Specifically, a linear model such as a 3x3 matrix (in the case of 3 color components) and optionally a vector of offsets are applied on the mapped components so as to compensate the decorrelation between the components introduced by applying independently a 1D LUT on each color component. Applying the linear model aims at introducing correlation between components. In this case,

$$\begin{pmatrix} Y\_out \\ Cb\_out \\ Cr\_out \end{pmatrix} = \begin{bmatrix} m_{00} & m_{01} & m_{02} \\ m_{10} & m_{11} & m_{12} \\ m_{20} & m_{21} & m_{22} \end{bmatrix} \begin{pmatrix} LUT\_Y(Y\_in) \\ LUT\_Cb(Cb\_in) \\ LUT\_Cr(Cr\_in) \end{pmatrix} + \begin{bmatrix} o_0 \\ o_1 \\ o_2 \end{bmatrix}$$

Where $m_{i,j}$ are the elements of the 3x3 matrix and $o_i$ are the elements of the vector of offsets. $m_{i,j}$ and $o_i$ are for example determined by a least mean square method as described in the document JCTVC-L0334 from Kerosky et al entitled "color gamut scalable video coding: new results" published in January 2013.

The 1D color LUTs, the matrix and possibly the vector of offsets may be provided to the encoder by external means. The invention is not limited by the way the 1D color LUT(s), the matrix and possibly the vector of offsets are determined.

In a step 16, the 1D color LUT(s), the matrix and possibly the vector of offsets are encoded in the scalable bitstream. Advantageously, they are encoded in the second layer. The invention is not limited by the way a 1D LUT is encoded. Exemplarily, the 1D LUTs are encoded as disclosed in the EP application 13305453.6 filed April 08 2013. A 1D LUT being defined as a lattice of vertices, i.e. as a regular geometrical arrangement of points over an area or in space, encoding the 1D LUT comprises for a current vertex:

- predicting the color value associated with the vertex from reconstructed color values associated with neighboring vertices; and
- encoding in the bitstream at least one residue computed between the color value of the vertex and its prediction.

According to a specific and non-limiting embodiment, one one-dimensional color LUT is encoded for each color component. Consequently, there are as many encoded one-dimensional color LUTs as there are color components. According to a variant, there are less encoded one-dimensional color LUTs than there are color components. For example, if two one-dimensional color LUTs are identical (e.g. LUT_Cb and LUT_Cr), only one of them needs to be encoded.

The matrix elements and the offsets are encoded in the bitstream for example as CABAC elements (CABAC stands for "Context Adaptive Binary Arithmetic Coder ").

In a step 18, a second version of the sequence of pictures is encoded into the second layer from processed pictures/regions. Specifically, a predictor is subtracted from an EL region to get residuals which are transformed into coefficients. The coefficients are then quantized and entropy coded in the second layer. The predictor for an EL region is either a classical intra or inter predictor derived from already encoded and reconstructed EL regions. According to a variant the predictor is an inter-layer predictor derived from processed BL regions, e.g. from the spatially co-located processed BL region or from a processed BL region non spatially co-located but identified with a motion vector. The choice of a predictor is out of the scope of the current invention. Exemplarily, in an encoder this choice is made by an encoding mode selection unit, e.g. based on rate-distortion optimization (RDO). Information (e.g. motion vector, coding modes, etc) are also encoded in the second layer to make it possible to recover the predictor on the decoder side.

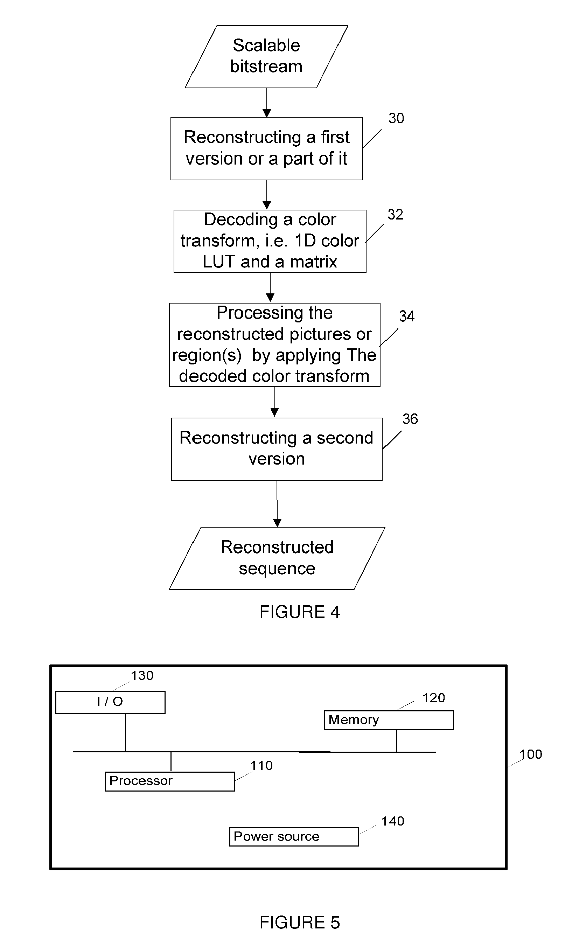

**Figure 4** depicts a method for decoding a scalable bitstream comprising a first layer and a second layer representative of a sequence of pictures according to a specific and non-limitative embodiment of the invention. According to different embodiments of the invention, the bitstream may be obtained from a source. Exemplarily, the bitstream is read from a local memory , e.g. a video memory or a RAM, a hard disk. In a variant, the bitstream is received from a storage interface, e.g. an interface with a mass storage, a ROM, an optical disc or a magnetic support and/or received from a communication interface, e.g. an interface to a point to point link or a point to multipoint link or a broadcast network. The decoded sequence of pictures may be sent to a destination. According to different embodiments of the invention, the destination belongs to a set comprising:

- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface, a HDMI interface) or a wireless interface (such as a IEEE 802.11 interface or a Bluetooth interface); and
- a screen.

In a step 30, a first version of the sequence of pictures or a part of it is reconstructed from the first layer. Specifically, all the pictures of the sequence or only part of them, i.e. regions used for prediction, are reconstructed. Reconstructing a region of a picture comprises entropy decoding of a part of the first layer into decoded coefficients. The decoded coefficients are inverse quantized to obtain reconstructed coefficients which are in turn inverse transformed into reconstructed residuals. Finally, the predictor of that region is added to the reconstructed residuals to obtain a reconstructed region. On the decoder side, the predictor is determined from already reconstructed regions using information decoded from the bitstream (e.g. coding mode, motion vectors, etc). The steps are possibly repeated on all the regions of a picture and on all the pictures to reconstruct the whole sequence.

In a step 32, the 1D LUT(s), the matrix and possibly the vector of offsets are decoded from the scalable bitstream, e.g. from the second layer. Exemplarily, the 1D LUTs are decoded as disclosed in the EP application 13305453.6 filed April 08 2013. The 1D LUT being defined as a lattice, i.e. as a regular geometrical arrangement of points or objects over an area or in space of vertices, decoding the 1 D LUT comprises for a current vertex:

- decoding at least one residue from the scalable bitstream;
- predicting the at least one color value associated with the current vertex from reconstructed color values associated with neighboring vertices; and
- reconstructing the at least color value of the current vertex from its prediction and the decoded at least one residue.

According to a specific and non-limiting embodiment, one one-dimensional color LUT is decoded for each color component. Consequently, there are as many decoded one-dimensional color LUTs as there are color components. According to a variant, there are less decoded one-dimensional color LUTs than there are color components.

The matrix elements and the offsets are decoded from the bitstream for example as CABAC elements.

In a step 34, the pictures or picture's regions of the reconstructed first version are processed by applying a color transform. The processing may also comprise upsampling the reconstructed BL pictures if their resolution is different from the resolution of the EL pictures. Applying a color transform also known as color mapping function comprises applying a one-dimensional color LUT independently on each color component of the pictures or picture regions of the reconstructed first version. Exemplarily, the pictures of the reconstructed first version have 3 color components (e.g. Y'CbCr or R'G'B'). So, a 1D color LUT LUT_Y() is applied on the first component Y_in of the reconstructed BL picture, a 1D color LUT LUT_Cb() is applied on the second component Cb_in and a 1D color LUT LUT_Cr() is applied on the third component Cr_in. (Y_out, Cb_out, Cr_out) being the mapped color values, Y_out=LUT_Y(Y_in), Cb_out=LUT_Cb(Cb_in) and Cr_out=LUT_Cb(Cr_in). In this case, there are as many one-dimensional color LUTs used as they are color components. According to a specific and non-limiting embodiment, some of the one-dimensional color LUTs may be identical, e.g. LUT_Cb and LUT_Cr. Applying a color mapping function independently on each color component thus breaks the dependency between tristimulus values. Advantageously, the memory requirements are reduced from $O(K^3)$ for the 3D LUT to $3* O(K)$ for the 3 1 D LUT with K being the sample range, i.e. 256 for 8-bit or 1024 for 10 bit video signals. Consequently, interpolation becomes 1D instead of 3D.

Advantageously, the 1D LUTs are upsampled. In this case, interpolation (e.g. linear interpolation) of the color LUT samples makes it possible to reconstruct color mapping values for every sample values of the input rage and output range.

Applying independently a 1D LUT on each color component breaks component correlation and possibly decreases the efficiency of the interlayer prediction and thus the coding efficiency. Advantageously, applying 1 D LUT on each color component is followed by composing the mapped components. Specifically, a linear model such as a 3x3 matrix (in the case of 3 color components) and a vector of offsets is applied on the mapped components so as to compensate the decorrelation between the components introduced by applying independently a 1 D LUT on each color component. Applying the linear model aims at introducing correlation between components. In this case,

$$\begin{pmatrix} Y\_out \\ Cb\_out \\ Cr\_out \end{pmatrix} = \begin{bmatrix} m_{00} & m_{01} & m_{02} \\ m_{10} & m_{11} & m_{12} \\ m_{20} & m_{21} & m_{22} \end{bmatrix} \begin{pmatrix} LUT\_Y(Y\_in) \\ LUT\_Cb(Cb\_in) \\ LUT\_Cr(Cr\_in) \end{pmatrix} + \begin{bmatrix} o_0 \\ o_1 \\ o_2 \end{bmatrix}$$

Where mi,j are the elements of the 3x3 matrix and oi are the elements of the vector of offsets. Mi,j and oi are for example determined by a least mean square method as described in the document JCTVC-L0334 from Kerosky et al entitled "color gamut scalable video coding: new results" published in January 2013.

In a step 36, a second version of the sequence of pictures is reconstructed from the second layer and from the processed pictures/regions. Reconstructing an EL region comprises entropy decoding of a part of the second layer into decoded coefficients. The decoded coefficients are inverse quantized to obtain reconstructed coefficients which are in turn inverse transformed into reconstructed residuals. Finally, the predictor of that region is added to the reconstructed residuals to obtain a reconstructed region. The predictor for an EL region is either a classical intra or inter predictor derived from already reconstructed EL regions. According to a variant the predictor is an inter-layer predictor derived from processed BL regions, e.g. from the spatially co-located processed BL region or from a processed BL region non spatially co-located but identified with a motion vector. On the decoder side, the predictor is determined from already reconstructed regions either in the same layer or in lower layers using information decoded from the bitstream (e.g. coding mode, motion vectors, etc).

**Figure 5** represents an exemplary architecture of an encoder 100 configured to encode a sequence of picture into a scalable bitstream in accordance with an exemplary embodiment of the invention, wherein the scalable bitstream comprises a first layer, e.g. a base layer, and a second layer. The encoder 100 comprises one or more processor(s) 110 , which is(are), for example, a CPU, a GPU and/or a DSP (English acronym of Digital Signal Processor), along with internal memory 120 (e.g. RAM, ROM, EPROM). The encoder 100 comprises one or several Input/Output interface(s) 130 adapted to display output information and/or allow a user to enter commands and/or data (e.g. a keyboard, a mouse, a touchpad, a webcam); and a power source 140 which may be external to the encoder 100. The encoder 100 may also comprise network interface(s) (not shown). The sequence of pictures may be obtained from a source. According to different embodiments of the invention, the source belongs to a set comprising:

- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (such as a CCD).

According to different embodiments of the invention, the scalable bitstream may be sent to a destination. As an example, the bitstream is stored in a local memory, e.g. a video memory or a RAM, a hard disk. In a variant, the bitstream is sent to a storage interface, e.g. an interface with a mass storage, a ROM, an optical disc or a magnetic support and/or transmitted over a communication interface, e.g. an interface to a point to point link or a point to multipoint link or a broadcast network.

According to an exemplary and non-limitative embodiment of the invention, the encoder 100 further comprises a computer program stored in the memory 120. The computer program comprises instructions which, when executed by the encoder 100, in particular by the processor 110, make the encoder 100 carry out the encoding method described with reference to figure 3. According to a variant, the computer program is stored externally to the encoder 100 on a non-transitory digital data support, e.g. on an external storage medium such as a HDD, CD-ROM, DVD, a read-only and/or DVD drive and/or a DVD Read/Write drive, all known in the art. The encoder 100 thus comprises an interface to read the computer program. Further, the encoder 100 could access one or more Universal Serial Bus (USB)-type storage devices (e.g., "memory sticks.") through corresponding USB ports (not shown).

According to exemplary and non-limitative embodiments, the encoder 100 is a device, which belongs to a set comprising:

- a mobile device:
- a camcorder;
- an encoding chip; and
- a video server.

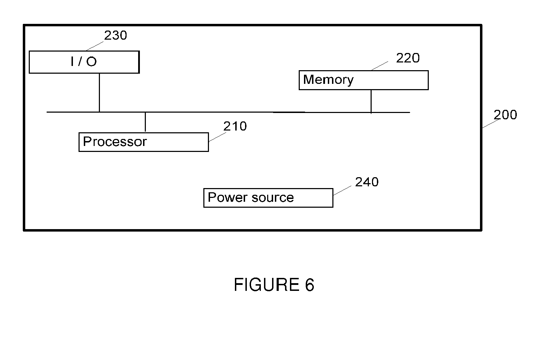

**Figure 6** represents an exemplary architecture of decoder 200 configured to decode a scalable bitstream in accordance with an exemplary embodiment of the invention, wherein the scalable bitstream comprises a first layer and a second layer. The decoder 200 comprises one or more processor(s) 210 , which is(are), for example, a CPU, a GPU and/or a DSP (English acronym of Digital Signal Processor), along with internal memory 220 (e.g. RAM, ROM, EPROM). The decoder 200 comprises one or several Input/Output interface(s) 230 adapted to display output information and/or allow a user to enter commands and/or data (e.g. a keyboard, a mouse, a touchpad, a webcam); and a power source 240 which may be external to the decoder 200. The decoder 200 may also comprise network interface(s) (not shown). According to different embodiments of the invention, the bitstream may be obtained from a source. Exemplarily, the bitstream is read from a local memory, e.g. a video memory or a RAM, a hard disk. In a variant, the bitstream is received from a storage interface, e.g. an interface with a mass storage, a ROM, an optical disc or a magnetic support and/or received from a communication interface, e.g. an interface to a point to point link or a point to multipoint link or a broadcast network. The decoded sequence of pictures may be sent to a destination. According to different embodiments of the invention, the destination belongs to a set comprising:

- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface, a HDMI interface) or a wireless interface (such as a IEEE 802.11 interface or a Bluetooth interface); and

- a screen.

According to an exemplary and non-limitative embodiment of the invention, the decoder 200 further comprises a computer program stored in the memory 220. The computer program comprises instructions which, when executed by the decoder 200, in particular by the processor 210, make the decoder 200 carry out the decoding method described with reference to figure 4. According to a variant, the computer program is stored externally to the decoder 200 on a non-transitory digital data support, e.g. on an external storage medium such as a HDD, CD-ROM, DVD, a read-only and/or DVD drive and/or a DVD Read/Write drive, all known in the art. The decoder 100 thus comprises an interface to read the computer program. Further, the decoder 200 could access one or more Universal Serial Bus (USB)-type storage devices (e.g., "memory sticks.") through corresponding USB ports (not shown).

According to exemplary and non-limitative embodiments, the decoder 200 is a device belonging to a set comprising:

- a mobile device:

- a set top box;

- a TV set;

- a tablet; and

- a decoding chip.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for encoding a sequence of pictures into a scalable bitstream comprising a first layer and a second layer comprising:

   - encoding (10) a first version of said sequence of pictures into the first layer;
   - reconstructing (12) at least one region of said first version of said sequence of pictures;

   wherein said method further comprises:

   - processing (14) said reconstructed at least one region by applying a one-dimensional color Look Up Table independently on each color component of said reconstructed at least one region to obtain mapped color components and applying a matrix on said mapped color components to obtain correlated mapped color components;
   - encoding (16) said one-dimensional color Look Up Table(s) and said matrix in said scalable bitstream; and
   - encoding (18) a second version of said sequence of pictures from said processed at least one region into the second layer.

2. The method of claim 1, wherein processing (14) said reconstructed at least one region further comprises adding a vector of offsets to said correlated mapped color components.

3. The method of claim 1 or 2, wherein encoding (16) said one-dimensional color Look Up Table(s) comprises encoding, for each color component, one one-dimensional color Look Up Table.

4. The method according to any of claims 1 to 3, wherein said sequence of pictures is obtained from a source belonging to a set comprising:

   - a local memory;
   - a storage interface,
   - a communication interface; and
   - an image capturing circuit.

5. The method according to any of claims 1 to 4, wherein said scalable bitstream is sent to a destination belonging to a set comprising:

   - a local memory;
   - a storage interface, and
   - a communication interface.

6. A method for decoding a scalable bitstream comprising a first layer and a second layer representative of a sequence of pictures comprising:

   - reconstructing (30) at least one region of said first version of said sequence of pictures;

   wherein said method further comprises:

   - decoding (32) one-dimensional color Look Up Table(s) and a matrix from said scalable bitstream; and

- processing (34) said reconstructed at least one region by applying a decoded one-dimensional color Look Up Table independently on each color component of said reconstructed at least one region to obtain mapped color components and applying said decoded matrix on said mapped color components to obtain correlated mapped color components; and
- reconstructing (36) a second version of said sequence of pictures from said second layer and from said processed at least one region.

7. The method of claim 6, wherein processing said reconstructed at least one region further comprises adding a vector of offsets to said correlated mapped color components.

8. The method of claim 6 or 7, wherein decoding (32) one-dimensional color Look Up Table(s) comprises decoding, for each color component, one one-dimensional color Look Up Table.

9. The method according to any of claims 6 to 8, wherein the scalable bitstream is obtained from a source belonging to a set comprising:

- a local memory;
- a storage interface; and
- a communication interface.

10. The method according to any of claims 6 to 9, wherein the sequence of pictures is sent to a destination belonging to a set comprising:

- a local memory;
- a storage interface;
- a communication interface; and
- a screen.

11. A coding device for encoding a sequence of pictures into a scalable bitstream comprising a first layer and a second layer comprising:

- means for encoding (110, 120, 130, 140) a first version of said sequence of pictures into the first layer;
- means for reconstructing (110, 120, 130, 140) at least one region of said first version of said sequence of pictures;

wherein said coding device further comprises:

- means for processing (110, 120, 130, 140) said reconstructed at least one region configured to apply a one-dimensional color Look Up Table independently on each color component of said reconstructed at least one region to get mapped color components and configured to apply a matrix on said mapped color components to get correlated mapped color components;
- means for encoding (110, 120, 130, 140) said one-dimensional color Look Up Table(s) and said matrix in said scalable bitstream; and
- means for encoding (110, 120, 130, 140) a second version of said sequence of pictures from said processed at least one region into the second layer.

12. The coding device according to claim 11, wherein said device belongs to a set comprising:

- a mobile device:
- a camcorder;
- an encoding chip; and
- a video server.

13. A decoding device for decoding a scalable bitstream comprising a first layer and a second layer representative of a sequence of pictures comprising:

- means for reconstructing (210, 220, 230, 240) at least one region of said first version of said sequence of pictures;

wherein said decoding device further comprises:

- means for decoding (210, 220, 230, 240) one-dimensional color Look Up Table(s) and a matrix from said scalable bitstream; and
- means for processing (210, 220, 230, 240) said reconstructed at least one region configured to apply a decoded one-dimensional color Look Up Table independently on each color component of said reconstructed at least one region to get mapped color components and configured to apply said decoded matrix on said mapped color components to get correlated mapped color components; and
- means for reconstructing (210, 220, 230, 240) a second version of said sequence of pictures from said second layer and from said processed at least one region.

14. The decoding device according to claim 13, wherein said device belongs to a set comprising:

- a mobile device:
- a set top box;
- a TV set;
- a tablet; and
- a decoding chip.

15. A computer program product comprising program code instructions to execute the steps of the encoding method according to any of claims 1 to 5 when this program is executed on a computer.

16. A computer program product comprising program code instructions to execute the steps of the decoding method according to any of claims 6 to 10 when this program is executed on a computer.

FIGURE 1 – Prior Art

FIGURE 2– Prior Art

Sequence
of pictures

Encoding a first version of
the sequence                    10

Reconstructing the first        12
version or a part of it

Processing the reconstructed     14
pictures or region(s)  by applying
a color transform

Encoding the color              16
transform, i.e. 1D color
LUTs and a matrix

Encoding a second               18
version of the sequence

Scalable
bitstream

FIGURE 3

Scalable
bitstream

Reconstructing a first
version or a part of it          30

Decoding a color
transform, i.e. 1D color          32
LUT and a matrix

Processing the
reconstructed pictures or          34
region(s)  by applying The
decoded color transform

Reconstructing a second          36
version

Reconstructed
sequence

FIGURE 4

130

I / O

120

Memory

110

Processor

100

140

Power source

FIGURE 5

230

I / O

220

Memory

200

210

Processor

240

Power source

FIGURE 6

Europäisches
Patentamt

European
Patent Office

Office européen
des brevets

## EUROPEAN SEARCH REPORT

Application Number

EP 13 30 6771

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2009/000110 A1 (THOMSON LICENSING [FR]; GAO YONGYING [CN]; WU YUWEN [CN]; WANG CHUANMI) 31 December 2008 (2008-12-31) * page 12, line 4 - line 17; figures 2-6 * | 1-16 | INV. H04N19/17 H04N19/186 |
| A | MARTIN WINKEN ET AL: "Bit-Depth Scalable Video Coding", IMAGE PROCESSING, 2007. ICIP 2007. IEEE INTERNATIONAL CONFERENCE ON, IEEE, PI, 1 September 2007 (2007-09-01), pages I-5, XP031157664, ISBN: 978-1-4244-1436-9 * paragraph [0004] * | 1-16 | |
| A | WO 2008/049445 A1 (FRAUNHOFER GES FORSCHUNG [DE]; MARPE DETLEV [DE]; WINKEN MARTIN [DE];) 2 May 2008 (2008-05-02) * page 15, line 20 - page 16, line 15 * | 1-16 | |

TECHNICAL FIELDS
SEARCHED      (IPC)

H04N

The present search report has been drawn up for all claims

| Place of search | Date of completion of the search | Examiner |
|---|---|---|
| Munich | 16 April 2014 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 30 6771

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2014

| Patent document cited in search report | Publication date | Patent family member(s) | Publication date |
|---|---|---|---|
| WO 2009000110    A1 | 31-12-2008 | CN    101796841 A<br>EP    2193661 A1<br>JP    5383674 B2<br>JP  2010531584 A<br>US  2010135393 A1<br>WO  2009000110 A1 | 04-08-2010<br>09-06-2010<br>08-01-2014<br>24-09-2010<br>03-06-2010<br>31-12-2008 |
| WO 2008049445    A1 | 02-05-2008 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 13305453 A

**Non-patent literature cited in the description**

- **KEROSKY et al.** *color gamut scalable video coding: new results,* January 2013